# EUROPEAN PATENT SPECIFICATION

(11) **EP 2 924 861 B1**
(45) Date of publication and mention of the grant of the patent: **01.03.2017**
(21) Application number: 13873159.1
(22) Date of filing: 27.08.2013
(51) Int. Cl.: H02M 3/155, H02M 7/12

(54) **CONVERTOR DEVICE AND AIR CONDITIONER**
UMRICHTERVORRICHTUNG UND KLIMAANLAGE
DISPOSITIF CONVERTISSEUR ET CLIMATISEUR

(30) Priority: 31.01.2013 JP 2013017060
(43) Date of publication of application: 30.09.2015
(73) Proprietor: Mitsubishi Heavy Industries, Ltd., Tokyo 108-8215 (JP)
(72) Inventor: KANIE, Tetsuo, Tokyo 108-8215 (JP); AIBA, Kenichi, Tokyo 108-8215 (JP); SUMITO, Kiyotaka, Tokyo 108-8215 (JP); SHIMIZU, Kenji, Tokyo 108-8215 (JP); SATO, Takeshi, Tokyo 108-8215 (JP)
(74) Representative: Intès, Didier Gérard André
(86) International application number: PCT/JP2013/072916
(87) International publication number: WO 2014/119033

(56) References cited:
- WO-A1-2011/007568
- JP-A- H05 336 748
- JP-A- 2007 097 361
- JP-A- 2010 233 439
- JP-A- 2012 186 910
- US-A1- 2005 036 337
- US-A1- 2011 291 631
- EKA FIRMANSYAH ET AL: "Totem-Pole Power-Factor-Correction Converter under Critical-Conduction-Mode Interleaved Operation", IEICE TRANSACTIONS ON COMMUNICATIONS, COMMUNICATIONS SOCIETY, TOKYO, JP, vol. E93B, no. 9, 1 September 2010 (2010-09-01), pages 2250-2256, XP001558540, ISSN: 0916-8516, DOI: 10.1587/TRANSCOM.E93.B.2250
- CHOUDHURY S ET AL: "A DSP based digitally controlled interleaved PFC converter", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 1, 6 March 2005 (2005-03-06), pages 648-654, XP010809890, DOI: 10.1109/APEC.2005.1453016 ISBN: 978-0-7803-8975-5

## Description

### {Technical Field}

The present invention relates to a converter device and an air conditioner including the same.

### {Background Art}

As a converter device, a device disclosed in PTL 1 has conventionally been known. The converter device disclosed in PTL 1 is configured to convert AC power to DC power. The converter device has two switching circuits including a basic switching circuit and an extension switching circuit for harmonic component reduction and power factor improvement. When a load is small, only the basic switching circuit is operated, while when the load is large, both the basic switching circuit and the extension switching circuit are operated.

More specifically, the converter device disclosed in PTL 1 includes a comparison circuit that determines whether or not a current output from a rectifier is smaller than a reference current, a comparison circuit that determines whether or not a voltage across a smoothing capacitor is larger than a reference voltage, and a control signal switch that is turned on and off in response to output signals from these two comparison circuits. The control signal switch is configured to disconnect the extension switching circuit and the converter device.

### {Citation List}

### {Patent Literature}

{PTL 1} Japanese Unexamined Patent Application, Publication No. 2010-233439
US 2005/0036337 discloses a converter device according to the preamble of claim 1.

### {Summary of Invention}

### {Technical Problem}

To determine whether or not to operate the extension switching circuit, the converter device disclosed in PTL 1 needs a current detector that detects a current output from the rectifier and a voltage detector that detects a voltage across the smoothing capacitor. The converter device further has a control signal switch that separates the extension switching circuit from the converter device. This means that the converter device includes a large number of component members, which may cause the device to be upsized.

The present invention has been made in view of such circumstances, and an object of the present invention is to provide a converter device and an air conditioner which can be downsized and simplified.

### {Solution to Problem}

The present invention refers to a converter device according to claim 1 and to a converter device according to claim 2.

A first aspect of the present invention is a converter device, connected to between an AC source and a load for converting AC power from the AC source into DC power and outputting the DC power, including: a rectification means that converts the AC power input from the AC source into the DC power; a smoothing means that is connected to a DC output side of the rectification means in parallel with the rectification means; two switching circuits that are provided in parallel with each other in between the rectification means and the smoothing means; and a control means configured to control the switching circuits, wherein each of the switching circuits includes: an inductive element that is serially provided in a positive electrode bus line which connects the rectification means and the smoothing means; and a switching means that is connected to a current output side of the inductive element in parallel with the rectification means, and the control means includes: a reference waveform generation means configured to generate a reference waveform of a predetermined carrier frequency; a voltage command generation means configured to generate a voltage command; a first signal generation means configured to compare the reference waveform with the voltage command so as to generate a first switching signal for one switching circuit; and a second signal generation means configured to compare an inverted reference waveform having a phase deviated by 180 degrees from a phase of the reference waveform, with the voltage command so as to generate a second switching signal for the other switching circuit.

According to this aspect, an inverted reference waveform is generated by inverting a reference waveform of a specified carrier frequency, and a first switching signal is generated by using the reference waveform and the voltage command, while a second switching signal is generated by using the inverted reference waveform and the voltage command. Based on the first switching signal, opening and closing of the switching means in one switching circuit is controlled, while opening and closing of the switching means in the other switching circuit is controlled based on the second switching signal. This makes it possible to deviate the switching phases of two switching means by about 180 degrees from each other, and to thereby provide an effect of negating a harmonic caused by switching. This effect can reduce the switching frequency. As a result, a switching loss can be reduced, and reduction in size and cost of the inductive element can be achieved.

Furthermore, the second switching signal is generated by using an inverted reference waveform formed by inverting the reference waveform, which makes it possible to generate the second switching signal with a phase deviated by 180 degrees from the phase of the first switching signal through simple processing. According to the above configuration, open-loop control can be performed, so that parameters to be fed back can be detected without the necessity of a highly precise sensor.

If the phase of an input current signal can be captured, a converter control phase can be optimized. As a result, input current distortion can be decreased and the effect of reducing the harmonic can be enhanced.

A second aspect of the present invention is a converter device, connected to between an AC source and a load for converting AC power from the AC source into DC power and outputting the DC power, including: a rectification means that converts the AC power input from the AC source into the DC power; two switching circuits that are provided in parallel with each other in between the AC source and the rectification means; and a control means configured to control the switching circuits, wherein each of the switching circuits includes: an inductive element that is serially provided in one of electric power lines which connects the AC source and the rectification means; and a switching means that is connected to a side of the inductive element opposite to the AC source in parallel with the rectification means, and the control means includes: a reference waveform generation means configured to generate a reference waveform of a predetermined carrier frequency; a voltage command generation means configured to generate a voltage command; a first signal generation means configured to compare the reference waveform with the voltage command so as to generate a first switching signal for one switching circuit; and a second signal generation means configured to compare an inverted reference waveform having a phase inverted by 180 degrees from the phase of the reference waveform, with the voltage command so as to generate a second switching signal for the other switching circuit.

According to this aspect, an inverted reference waveform is generated by inverting a reference waveform of a specified carrier frequency, and a first switching signal is generated by using the reference waveform and the voltage command, while a second switching signal is generated by using the inverted reference waveform and the voltage command. Based on the first switching signal, opening and closing of the switching means in one switching circuit is controlled, while opening and closing of the switching means in the other switching circuit is controlled based on the second switching signal. This makes it possible to deviate the switching phases of two switching means by about 180 degrees from each other, and to thereby provide the effect of negating the harmonic caused by switching. This effect can reduce the switching frequency. As a result, the switching loss can be reduced and reduction in size and cost of the inductive element can be achieved.

Furthermore, the second switching signal is generated by using an inverted reference waveform formed by inverting the reference waveform, which makes it possible to generate the second switching signal with a phase deviated by 180 degrees from the phase of the first switching signal through simple processing. According to the above configuration, open-loop control can be performed, so that parameters to be fed back can be detected without the necessity of a sensor.

According to this aspect, as compared with the converter device according to the first aspect, distortion of an input current waveform can be suppressed without the necessity of optimizing the converter control phase.

According to the invention, in the converter device, in rated load operation, the carrier frequency is preferably set to be closer to a lower limit than an upper limit within a range from the lower limit to the upper limit, the lower limit being a switching frequency satisfying a harmonic regulation value, the upper limit being a switching frequency satisfying a noise regulation value.

Thus, in rated load operation, the switching frequency is set to be as small as possible within a frequency range of clearing noise regulation and harmonic regulation. As a result, the switching loss can be reduced as much as possible. Examples of harmonic regulation for the air conditioner includes IEC61000-3-2 standard. Examples of noise regulation for the air conditioner includes CISPR14-1 standard.

In the converter device, in low load operation where the load is equal to or lower than a specified threshold value set in advance, the control means may execute a partial switching mode wherein a number of times of opening and closing the switching means in one AC voltage waveform cycle, starting from a zero crossing point, is set in advance, and a phase and a pulse width for opening and closing the switching elements are controlled based on the number of times of switching. When the load is more than the threshold value, the control means may execute switching control based on the first switching signal and the second switching signal.

Or in low load operation where the load is equal to or lower than a specified threshold value set in advance, the control means may stop switching of any one of the switching circuits while increasing a switching frequency of the other switching circuit. When the load is more than the threshold value, the control means may execute switching control based on the first switching signal and the second switching signal.

When the switching frequency is set to be low, it may be impossible to clear the specified noise regulation or specified harmonic regulation in the low load operation. In such a case, changing the switching control method in the low load operation makes it possible to clear the noise regulation and harmonic regulation cleared even in the low load operation.

The converter device may include a current detection means that is provided on the input side or the output side of the rectification means, wherein the voltage command generation means may delay a phase of the voltage command more as an input current becomes larger, and adjust the phase of the voltage command in accordance with a change rate of the input current in a vicinity of the zero crossing when the change rate is a specified value or more.

Thus, an input current signal is detected and the phase of a voltage command is adjusted in accordance with the input current signal. As a consequence, current distortion of the input current in the vicinity of the zero crossing can be reduced, and the effect of harmonic reduction control can be enhanced.

The converter device may include a DC voltage detection means configured to detect a voltage across the smoothing means, wherein the voltage command generation means may calculate a difference between a preset reference DC voltage and a voltage value detected by the DC voltage detection means, and increase an amplitude of the voltage command more as the difference is larger.

Thus, a DC voltage across the smoothing means is detected, and the amplitude of a voltage command is adjusted based on the DC voltage detected value. Specifically, the amplitude of the voltage command is increased more and the increase rate of the harmonic in the converter is reduced more as the difference between the reference DC voltage and the voltage value detected by the DC voltage detection means is larger. As a result, ripples contained in the DC voltage can be suppressed while controllability of the inverter can be enhanced.

In the converter device, each of the switching circuits may have a diode that directs a current passing through the switching element in one direction or in both directions, and further the diode to be adopted may be made of an SiC element.

By adopting the diode made of a SiC element, it becomes possible to reduce a reverse recovery current passing through the switching element. As a result, the switching loss can effectively be reduced.

A third aspect of the present invention is an air conditioner including the converter device.

### {Advantageous Effects of Invention}

According to the present invention, an effect that the device can be downsized and simplified can be obtained.

### {Brief Description of Drawings}

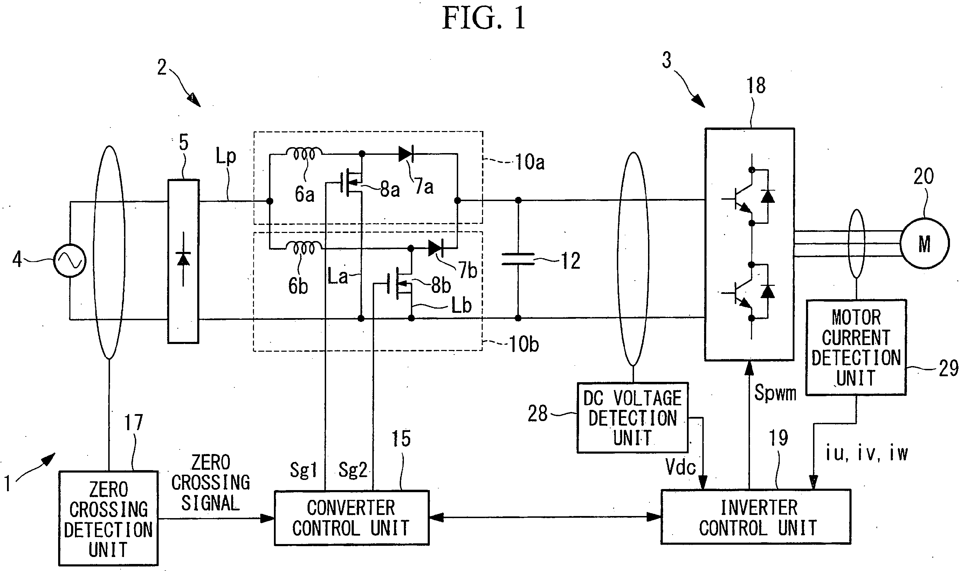

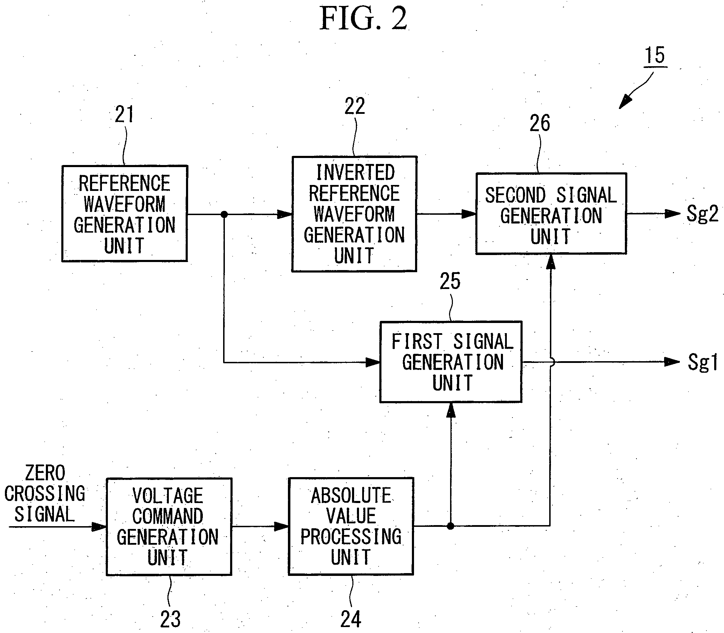

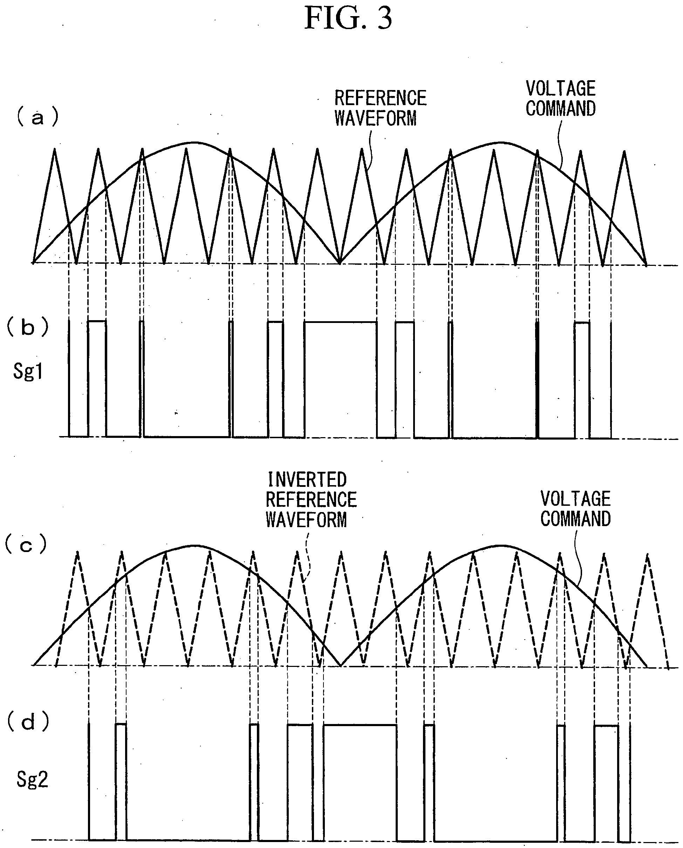

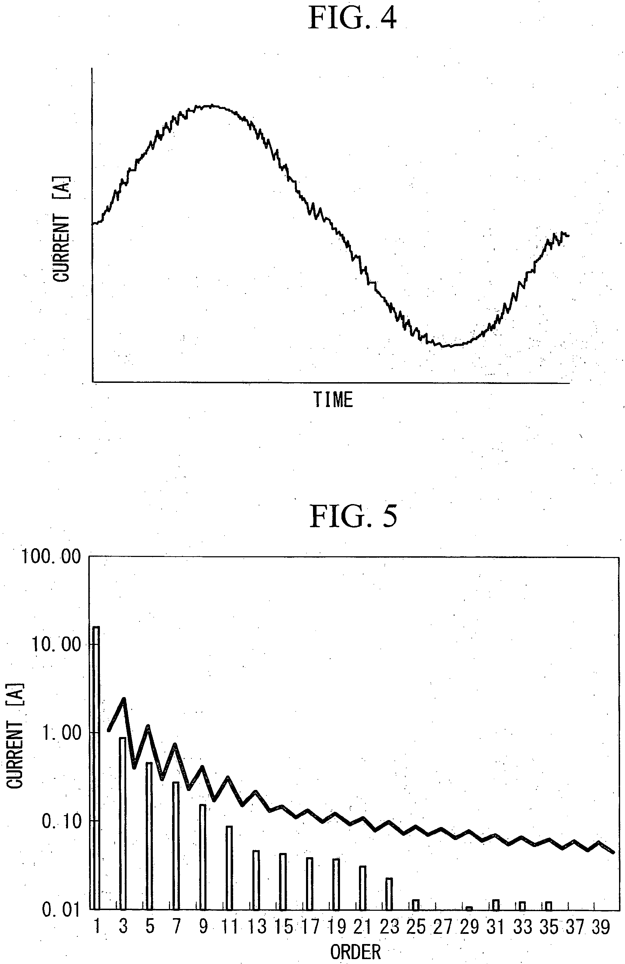

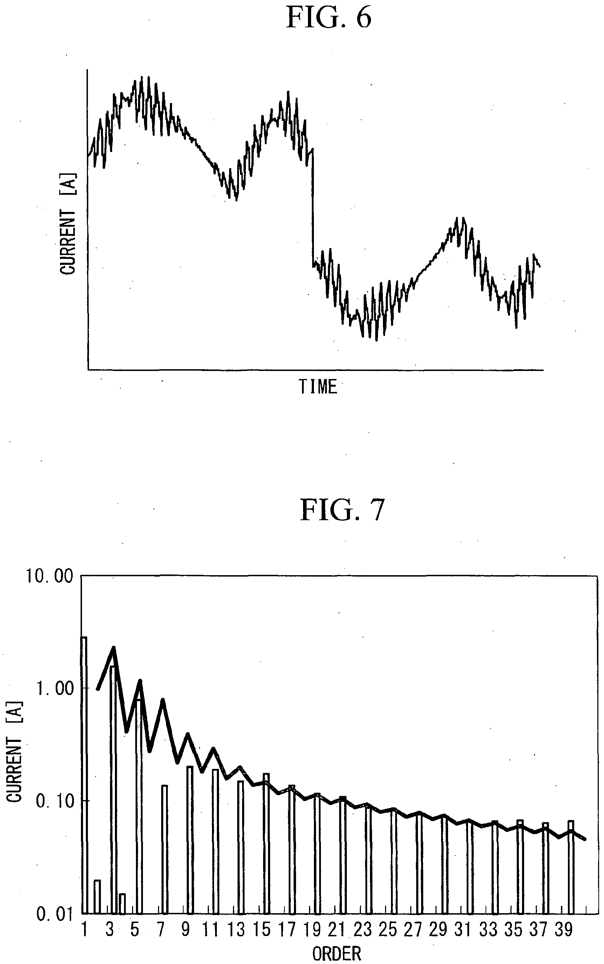

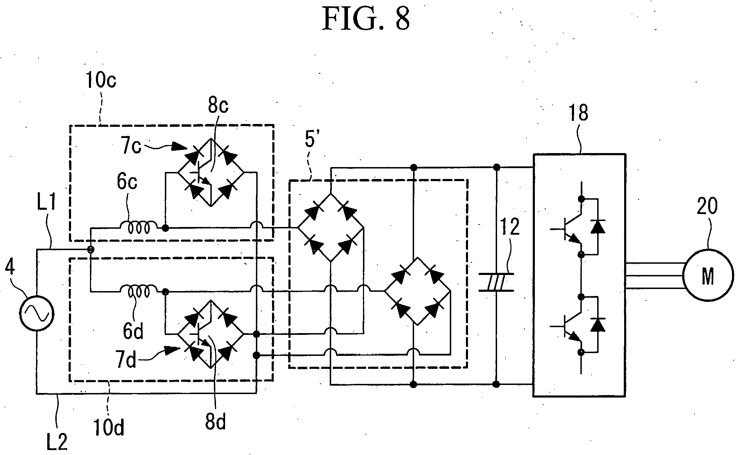

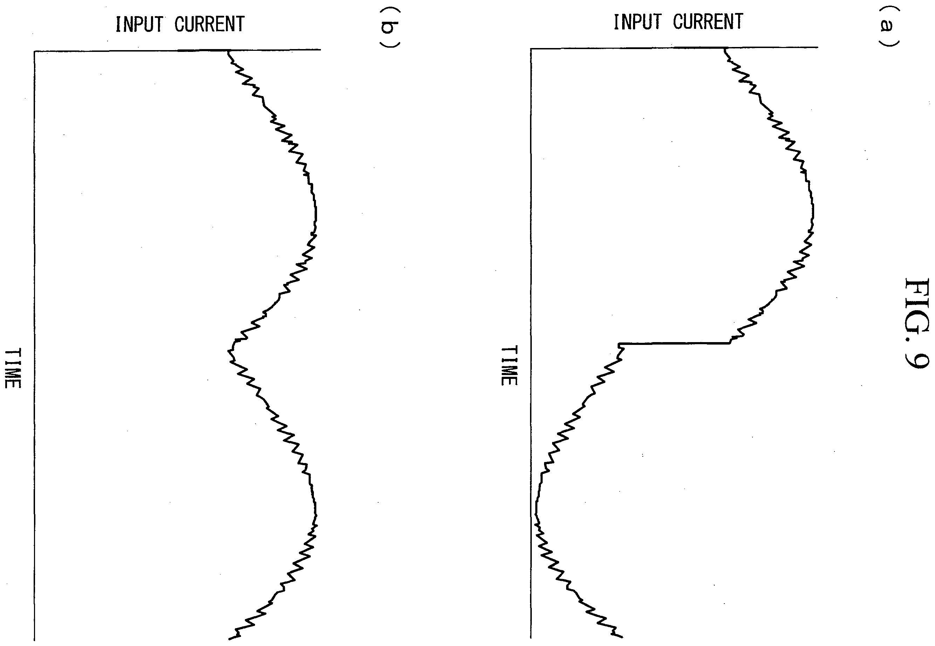

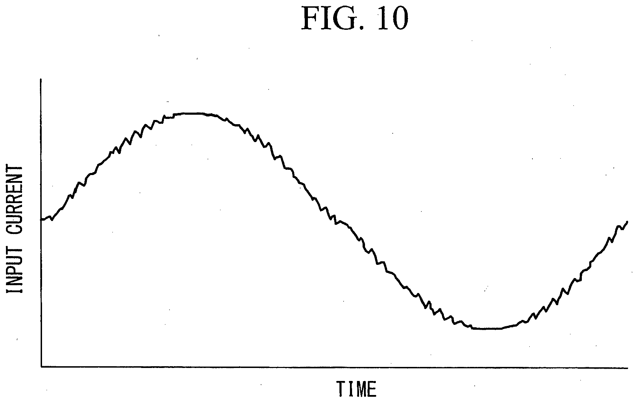

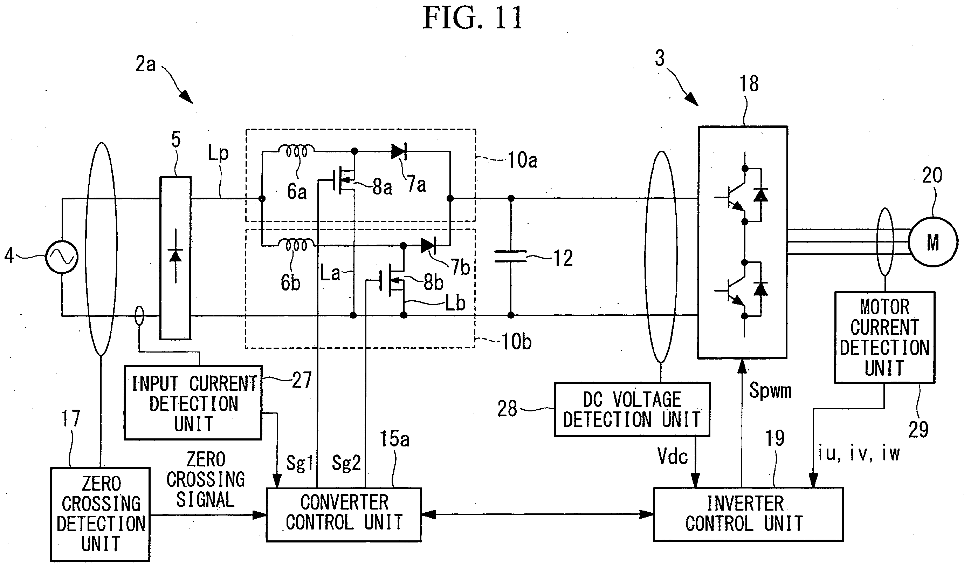

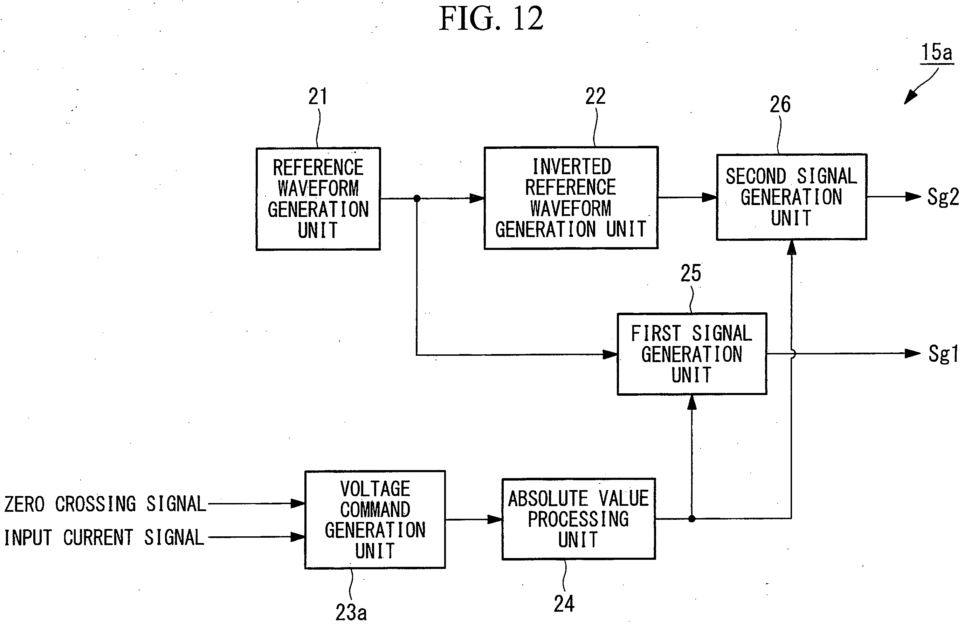

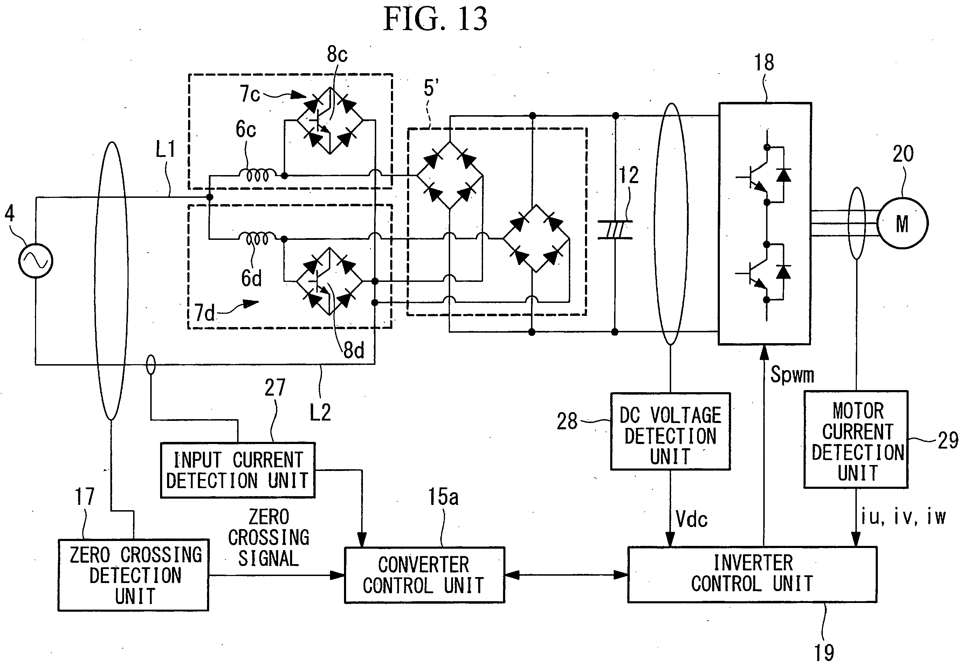

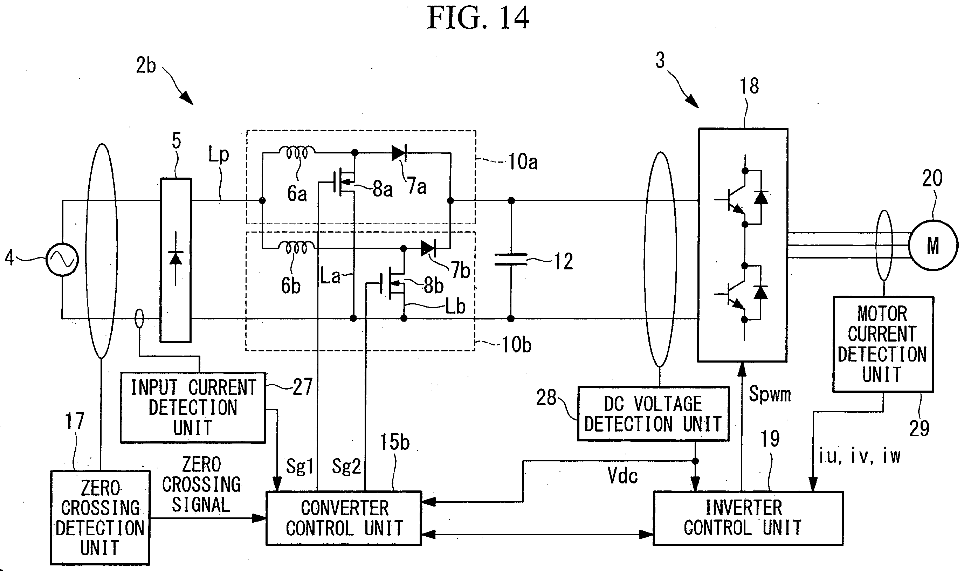

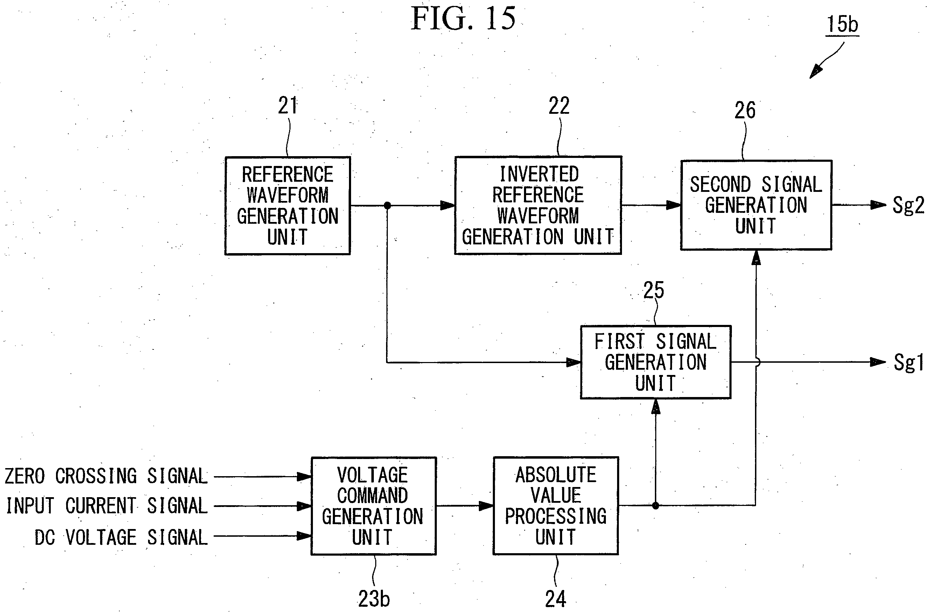

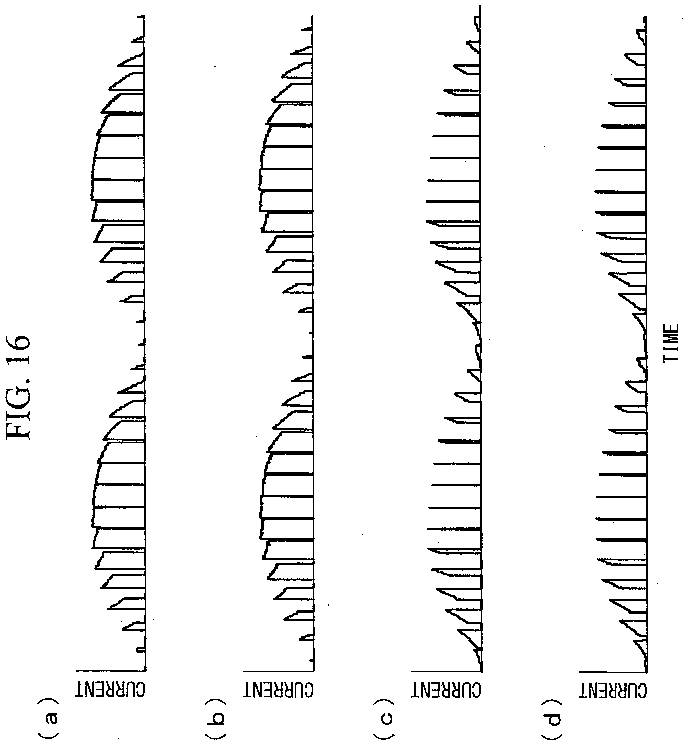

{Fig. 1} Fig. 1 illustrates a schematic configuration of a motor driver according to a first embodiment of the present invention.
{Fig. 2} Fig. 2 is a functional block diagram of a converter control unit illustrated in Fig. 1.
{Fig. 3} Fig. 3 is an explanatory view of reference waveforms, inverted reference waveforms, and first and second switching signals.
{Fig. 4} Fig. 4 illustrates one example of the result of simulating an input current waveform in the converter device according to the present embodiment in rated load operation.
{Fig. 5} Fig. 5 illustrates comparison between the result of frequency analysis of the input current waveform illustrated in Fig. 4 and a noise regulation value.
{Fig. 6} Fig. 6 illustrates one example of the result of simulating the input current waveform in a converter device according to a first embodiment in low load operation.
{Fig. 7} Fig. 7 illustrates comparison between the result of frequency analysis of the input current waveform illustrated in Fig. 6 and a harmonic regulation value.
{Fig. 8} Fig. 8 illustrates a schematic configuration of a motor driver according to a fourth embodiment of the present invention.
{Fig. 9} Fig. 9 illustrates one example of an input current waveform when a converter control phase (a difference in phase from a power supply voltage) is deviated from a specified value in the converter device according to the first embodiment of the present invention.
{Fig. 10} Fig. 10 illustrates one example of an input current waveform when a converter control phase (a difference in phase from a power supply voltage) is deviated from the specified value in the converter device according to the fourth embodiment of the present invention.
{Fig. 11} Fig. 11 illustrates a schematic configuration of a motor driver according to a fifth embodiment of the present invention.
{Fig. 12} Fig. 12 is a functional block diagram of a converter control unit illustrated in Fig. 11.
{Fig. 13} Fig. 13 illustrates another schematic configuration of the motor driver according to the fifth embodiment of the present invention.
{Fig. 14} Fig. 14 illustrates a schematic configuration of a motor driver according to a sixth-embodiment of the present invention.
{Fig. 15} Fig. 15 is a functional block diagram of a converter control unit illustrated in Fig. 13.
{Fig. 16} Fig. 16 illustrates comparison between currents passing through a diode and a switching element, when the diode made of an SiC element is adopted.

### {Description of Embodiments}

Hereinbelow, a description is given of each of the embodiments of a converter device of the present invention when the converter device is applied to a motor driver for driving a compressor motor of an air conditioner, with reference to the drawings. The converter device of the present invention is applied not only to air conditioners, but is widely applicable to apparatuses configured to convert AC power from an AC source into DC power.

### {First Embodiment}

Fig. 1 illustrates a schematic configuration of a motor driver according to a first embodiment of the present invention. As illustrated in Fig. 1, the motor driver 1 mainly includes a converter device 2 which converts AC power from a AC source 4 into DC power and to output the DC power, and an inverter device 3 which converts the DC power output from the converter device 2 into three phase AC power and to output the three phase AC power to a compressor motor (load) 20.

The converter device 2 mainly includes a rectifier circuit 5 which converts AC power input from the AC source 4 into DC power, a smoothing capacitor (smoothing means) 12 connected to a DC output side of the rectifier circuit 5 in parallel with the rectifier circuit 5, two switching circuits 10a and 10b provided in parallel with each other in between the rectifier circuit 5 and the smoothing capacitor 12, and a converter control unit (control means) 15 which controls the switching circuits 10a and 10b.

The switching circuit 10a has an inductor (inductive element) 6a serially provided in a positive electrode bus line Lp which connects the rectifier circuit 5 and the smoothing capacitor 12, a diode 7a connected in series to a current output side of the inductor 6a, and a switching element 8a having one end being connected to between the inductor 6a and the diode 7a and being connected in parallel with the rectifier circuit 5.

Similarly, the switching circuit 10b has an inductor 6b serially provided in the positive electrode bus line Lp which connects the rectifier circuit 5 and the smoothing capacitor 12, a diode 7b connected in series to a current output side of the inductor 6b, and a switching element 8b having one end being connected to between the inductor 6b and the diode 7b and being connected in parallel with the rectifier circuit 5.

Examples of the switching elements 8a and 8b include field-effect transistors (FETs) and insulated gate bipolar transistors (IGBTs).

The AC source 4 is provided with a zero crossing detection unit 17 for detecting a zero crossing point. A zero cross signal from the zero crossing detection unit 17 is output to the converter control unit 15.

The inverter device 3 includes a bridge circuit 18 including six switching elements, and an inverter control unit 19 which controls opening and closing of the switching elements in the bridge circuit 18. For example, the inverter control unit 19 generates a gate driving signal Spwm of each switching element based on a demanded rotation speed command input from an upper device (illustration omitted), and gives the signal to the bridge circuit 18. Specific inverter control techniques include vector control, sensorless vector control, V/F control, overmodulation control, and one-pulse control.

In order to implement the above-stated control techniques, there are provided a DC voltage detection unit 28 which detects an input DC voltage Vdc input into the bridge circuit 18 and a motor current detection unit 29 which detects each of phase currents iu, iv, and iw passing to the compressor motor 20. These detected values Vdc, iu, iv, and iw are input into the inverter control unit 19. Here, the motor current detection unit 29 may detect a current passing through a negative electrode-side power line between the bridge circuit 18 and the smoothing capacitor 12, and may acquire each of the phase currents iu, iv, and iw from the detection signal.

For example, the converter control unit 15 and the inverter control unit 19 are micro processing units (MPUs) having a computer-readable recording medium storing a program for executing each processes described below. When a CPU downloads the program stored in the recording medium to a main storage, such as a RAM, and executes the program, the following processes are each implemented. Examples of the computer-readable recording medium include magnetic disks, magneto-optical disks, and semiconductor memory devices.

The converter control unit 15 and the inverter control unit 19 may be embodied by one MPU, or may be embodied by individual MPUs.

Fig. 2 is a functional block diagram of the converter control unit 15. As illustrated in Fig. 2, the converter control unit 15 includes a reference waveform generation unit 21, an inverted reference waveform generation unit 22, a voltage command generation unit 23, an absolute value processing unit 24, a first signal generation unit 25, and a second signal generation unit 26.

The reference waveform generation unit 21 generates a reference waveform (for example, a triangular wave) of a predetermined carrier frequency (see Fig. 3(a)). Here, the carrier frequency is set to be closer to a lower limit than an upper limit within a range from the lower limit to the upper limit, the lower limit being a switching frequency satisfying a harmonic regulation value, the upper limit being a switching frequency satisfying a noise regulation value. Here, examples of harmonic regulation standards for the air conditioner include IEC61000-3-2. Examples of noise regulation standards include CISPR14-1. Thus, it becomes possible to minimize a loss caused by switching by adopting a frequency close to a lower limit within a range from the lower limit to the upper limit of the switching frequency that clears appropriate noise regulation and harmonic regulation values, i.e., by lowering the switching frequency as low as possible. In the case of the air conditioner, switching may be omitted if the harmonic regulation can be satisfied. When switching is performed in actual application, the switching frequency is preferably determined within the range of about 100 Hz to 5 kHz, for example.

The inverted reference waveform generation unit 22 generates an inverted reference waveform by deviating the phase of the reference waveform generated by the reference waveform generation unit 21 by 180 degrees (see Fig. 3(c)). The voltage command unit 23 generates a sine wave voltage command based on a zero crossing signal from the zero crossing detection unit 17, a converter control phase (difference in phase from power supply voltage) registered in advance, and a voltage command amplitude value thereof.

The absolute value processing unit 24 inverts a negative waveform in the sine wave voltage command generated by the voltage command generation unit 23 to form a positive waveform. Accordingly, voltage waveforms as illustrated in Fig. 3(a) and 3(c) are generated.

As illustrated in Figs. 3(a) and 3(b), the first signal generation unit 25 compares the reference waveform with the voltage command after inversion of the negative waveform output from the absolute value processing unit 24. Based on the result, the first signal generation unit 25 generates a first switching signal Sg1 for controlling the switching circuit 10a.

As illustrated in Figs. 3(c) and 3(d), the second signal generation unit 26 compares the inverted reference waveform with the voltage command after inversion of the negative waveform. Based on the result, the second signal generation unit 26 generates a second switching signal Sg2 for controlling the switching circuit 10b.

The first switching signal Sg1 generated by the first signal generation unit 25 and the second switching signal Sg2 generated by the second signal generation unit 26 are each given to gate circuits (illustration omitted) which drives the switching elements 8a and 8b. Based on these signals, the gate circuits are driven so as to control opening and closing of the switching elements 8a and 8b.

A description is now given of the operation of the above-configured converter device 2 with reference to Figs. 1 to 3.

First, a zero crossing point of the input power source 4 is detected by the zero crossing detection unit 17, and a zero crossing signal is input into the converter control unit 15. In the voltage command generation unit 23 in the converter control unit 15, a sine wave power command is generated based on the input zero crossing signal, the converter control phase (information on difference in phase from input voltage) registered in advance, and the preset voltage command amplitude value. The power command is output to the absolute value processing unit 24, and a power command wherein a negative waveform is inverted to a positive waveform is generated.

Meanwhile, in the reference waveform generation unit 21, a reference waveform which is a triangular waveform of a specified carrier frequency is generated, and this reference waveform is output to the first signal generation unit 25 and the inverted reference waveform generation unit 22. In the inverted reference waveform generation unit 22, an inverted reference waveform with a phase deviated by 180 degrees from the phase of the reference waveform is generated, and this waveform is output to the second signal generation unit 26.

In the first signal generation unit 25, as illustrated in Figs. 3(a) and 3(b), the reference waveform is compared with the voltage command from the absolute value processing unit 24, and a first switching signal Sg1 is generated. Accordingly, opening and closing of the switching element 8a are controlled based on the first switching signal Sg1.

In the second signal generation unit 26, as illustrated in Figs. 3(c) and 3(d), an inverted reference waveform is compared with the voltage command from the absolute value processing unit 24, and a second switching signal Sg2 is generated. Accordingly, opening and closing of the switching element 8b are controlled based on the second switching signal Sg2.

As described above, according to the converter device and the air conditioner according to the present embodiment, an inverted reference waveform is generated by inverting a triangular waveform of a specified carrier frequency, and a first switching signal Sg1 is generated by using the reference waveform, while a second switching signal Sg2 is generated by using the inverted reference waveform. This makes it possible to deviate the switching phases of the switching elements 8a and 8b by about 180 degrees from each other. Accordingly, the effect of negating the harmonic generated by switching can be obtained. By using this effect, the switching frequency can be lowered to the level of about 100 Hz to about 5 kHz. As a result, a switching loss can be reduced, while reduction in size and cost of the inductors 6a and 6b can be achieved.

Since the second switching signal Sg2 is generated by using the inverted reference waveform formed by inverting the reference waveform, it becomes possible to easily generate the second switching signal Sg2 with a phase deviated by 180 degrees from the phase of the first switching signal Sg1 through simple processing.

Fig. 4 illustrates one example of the result of simulating an input current waveform in the converter device according to the present embodiment in rated load operation. Fig. 5 illustrates comparison between the result of frequency analysis of the input current waveform illustrated in Fig. 4 and a noise regulation value.

As illustrated in Fig. 4, a clear input current waveform with few ripples is obtained. As illustrated in Fig. 5, the harmonic regulation value is cleared in all the orders.

### {Second Embodiment}

A description is now given of a converter device and an air conditioner according to a second embodiment of the present invention. Assume that the switching frequency of the switching elements 8a and 8b is lowered to the level of about 100Hz to 5 kHz in the converter device 2 according to the first embodiment described before. In rated load operation, a satisfactory result is obtained as illustrated in Figs. 4 and 5 from both the viewpoints of harmonics and noise, whereas in low load operation, an input current waveform may be distorted, and this may hinder the harmonic regulation from being cleared as illustrated in Figs. 6 and 7. Accordingly, in the present embodiment, switching control modes in low load operation and in non-low load operation are switched so as to avoid the input current waveform being distorted in the low load operation.

Specifically, in low load operation, a publicly known control system is adopted which is so-called a partial switching mode, wherein the number of times of opening and closing the switching elements 8a and 8b in one AC voltage waveform cycle, starting from a zero crossing point, is registered in advance, and a phase and a pulse width for opening and closing the switching elements 8a and 8b are controlled based on the number of times of switching.

For example, in low load operation, a control method disclosed in PCT International Publication No. WO2011/007568 is adopted.

Determination of the low load operation or not is made based on, for example, an input current and/or a motor output. Specifically, a threshold value of the input current is registered in advance for determination of the low load operation. When the input current is equal to or lower than the threshold value, the low load operation is determined. When the input current becomes more than the threshold value, non-low load operation is determined.

The motor output to be used for determination is a multiplication value of a motor rotation frequency and a torque, and/or a multiplication value of a motor voltage and a motor current. These values are used as evaluation values, based on which determination is made. In this case, the threshold value is registered in advance for determination of the low load operation. When an evaluation value is equal to or lower than the threshold value, the low load operation is determined. When the evaluation value becomes more than the threshold value, the non-low load operation is determined. Various information pieces required for the determination, such as a motor rotation frequency, a motor voltage, and a motor current, may be obtained by providing sensors which detect these information pieces and inputting values detected by these sensors directly into the converter control unit 15, or may be obtained from the inverter control unit 19, for example.

It is preferable to impart hysteresis to the threshold values. This makes it possible to avoid frequent switchover of the control modes.

As described in the foregoing, according to the converter device and the air conditioner in the present embodiment, the partial switching mode is adopted in low load operation, and the switching control technique according to the first embodiment described before is adopted in regions other than the low load operation, such as in a middle load region and a high load region. Accordingly, the switching frequency in the middle load region and the high load region can be set to a lowest possible frequency within the range of clearing the harmonic regulation. At the same time, another switching control mode is adopted in the low load operation where there are possibilities that the harmonic regulation cannot be satisfied. As a result, it becomes possible to clear the noise regulation.

### {Third Embodiment}

A description is now given of a converter device and an air conditioner according to a third embodiment of the present invention. In the second embodiment described before, the partial switching control mode is adopted in low load operation. However in the present embodiment, opening and closing of one switching element, such as a switching element 6b, is stopped while a switching frequency of the other switching element 6a is increased. For example, when the low load operation is determined, the converter control unit stops the opening and closing control of the switching element 8b based on the second switching signal, while increasing the carrier frequency in the reference waveform generation unit so as to increase the switching frequency of the switching element 8a. For example, the carrier frequency is doubled so as to double the switching frequency of the switching element 8a. Consequently, with the function of the switching element 8a, the input current waveform can be approximated to a sinusoidal waveform even in low load operation, so that the harmonic regulation can be cleared. Determination of the low load operation or not is made in a similar manner as in the second embodiment described before.

In low load operation, operation of any one of the switching elements may be stopped. Accordingly, instead of the above example, the operation of the switching element 8a may be stopped, while the switching frequency of the switching element 8b may be increased.

### {Fourth Embodiment}

A description is now given of a converter device and an air conditioner according to a fourth embodiment of the present invention. In the first embodiment described before, the switching circuits 10a and 10b are provided in between the rectifier circuit 5 and the smoothing capacitor 12. However, in the converter device according to the present embodiment, switching circuits 10c and 10d are provided in between the input power source 4 and a rectifier circuit 5'.

Hereinafter, the converter device and the air conditioner according to the present embodiment will be described with reference to Fig. 8.

The switching circuit 10c includes an inductor 6c connected in series to a power line L1 which connects the AC source 4 and the rectifier circuit 5', and a switching element 8c connected to a side of the inductor 6c opposite to the AC source 4 in parallel with the rectifier circuit 5'. Here, when the switching circuit 10c is provided closer to the input power source 4 than the rectifier circuit 5', AC voltage is applied to the switching circuit 10c, so that the switching element 8c needs to be bidirectional. Accordingly, in order to enable the switching element 8c to perform bidirectional switching, four diodes 7c are provided.

Similarly, the switching circuit 10d includes an inductor 6d connected in series to the power line L1 which connects the AC source 4 and the rectifier circuit 5', and a switching element 8d connected to a side of the inductor 6d opposite to the AC source 4 in parallel with the rectifier circuit 5'. In order to enable the switching element 8d to perform bidirectional switching, four diodes 7d are provided.

In the present embodiment, the rectifier circuit 5' is provided so as to correspond to each of the switching circuits 10c and 10d.

In Fig. 8, the switching circuits 10c and 10d are connected to the power line L1 side, though the switching circuit 10c and 10d may be connected to a power line L2 side instead of the power line L1 side.

In the thus-configured converter device, opening and closing control of the switching elements 8c and 8d in each of the switching circuits 10c and 10d are executed in the similar manner as in the first embodiment described before. As a result, the switching elements 8c and 8d are switched with a phase difference of about 180 degrees.

As described in the foregoing, according to the converter device and the air conditioner in the present embodiment, the switching frequency can be lowered to the level of, for example, about 100Hz to about 5 kHz as in the case of the first embodiment, so that a switching loss can be reduced, while reduction in size and cost of the inductors 6c and 6d can be achieved.

Since the second switching signal Sg2 is generated by using an inverted reference waveform formed by inverting the reference waveform, it becomes possible to easily generate the second switching signal Sg2 with a phase deviated by 180 degrees from the phase of the first switching signal Sg1 through simple processing.

Furthermore, since the switching circuits 10c and 10d are provided in between the input power source 4 and the rectifier circuit 5', current distortion at zero crossing of the input current is decreased even when a control phase difference between the power supply voltage and the control voltage is deviated from a specified value. As a result, the effect of harmonic reduction control can be enhanced.

For example, Figs. 9 and 10 illustrate the case where the control phase difference between the power supply voltage and the control voltage is deviated from an appropriate state. Fig. 9 illustrates the case where the switching circuits 10a and 10b are provided in between the rectifier circuit 5 and the smoothing capacitor 12, as in the first embodiment described before. Fig. 9(a) illustrates a current waveform on the input side of the rectifier circuit 5, and Fig. 9(b) illustrates a current waveform on the output side of the rectifier circuit 5. Fig. 10 illustrates an input current waveform in the converter device according to the present embodiment.

As illustrated in Fig. 9, when the switching circuits 10a and 10b are provided in between the rectifier circuit 5 and the smoothing capacitor 12, the current waveform has a large distortion in the vicinity of the zero crossing. Contrary to this, in the converter device according to the present embodiment as illustrated in Fig. 10, the current waveform of the input current has a smaller distortion in the vicinity of the zero crossing, which indicates that the effect of harmonic reduction control is high.

### {Fifth Embodiment}

A description is now given of a converter device and an air conditioner according to a fifth embodiment of the present invention. The converter device and the air conditioner according to the present embodiment are generally similar in configuration to the converter device and the air conditioner according to the first embodiment described before, except for the point that an input current detection unit 27 which detects an input current is provided in between the AC source 4 and the rectifier circuit 5 and that the detected input current signal is output to a converter control unit 15a as illustrated in Fig. 11.

Hereinafter, a converter device 2a according to the present embodiment will be described with reference to Figs. 11 and 12. Fig. 11 illustrates a schematic configuration of a motor driver according to the fifth embodiment of the present invention, and Fig. 12 is a functional block diagram of a converter control unit according to the present embodiment.

The converter control unit 15a receives an input of a zero crossing signal detected by the zero crossing detection unit 17 and an input current signal detected by the input current detection unit 27. A voltage command generation unit 23a of the converter control unit 15a refers to a data table and/or performs specified arithmetic calculation by-using the input zero crossing signal and input current signal. As a result, a converter control phase (difference in phase from power supply voltage) is derived, and based on the derived converter control phase and the specified voltage amplitude value set in advance, a sine wave voltage command is generated.

Here, the data table is set to delay the converter control phase more as the input current is larger, in consideration of the phase difference between the inductors 6a and 6b, for example. For example, the specified arithmetic calculation is to adjust the control phase in accordance with a change rate (increase rate or decrease rate) of the input current signal in the vicinity of the zero crossing of the power supply voltage. More specifically, when the increase rate surpasses a specified threshold value, the control phase is increased by a specified amount, whereas when the decrease rate surpasses a specified threshold value, the control phase is decreased by a specified amount.

For example, the voltage amplitude value of the voltage command is set to be able to secure a DC voltage which does not cause the compressor motor 20 to stall, even when a large motor load is present and thereby relatively large ripples are generated.

As described in the foregoing, according to the converter device 2a and the air conditioner in the present embodiment, an input current signal is detected, a converter control phase is adjusted in accordance with this input current signal, and a voltage command is generated based on the adjusted converter control phase. As a consequence, current distortion of the input current in the vicinity of the zero crossing can be reduced, and the effect of harmonic reduction control can be enhanced.

The voltage amplitude value of the voltage command is set to be able to secure a DC voltage which does not cause the compressor motor 20 to stall, even when a large motor load is present and thereby relatively large ripples are generated. As a result, the DC voltage sufficient and essential for operation of the compressor motor 20 can constantly be supplied to the inverter 3, which can prevent the compressor motor 20 from being stalled.

Fig. 13 illustrates another schematic configuration of the motor driver according to the fifth embodiment of the present invention, and specifically illustrates a schematic configuration of a motor driver formed by combining the converter device according to the fourth embodiment illustrated in Fig. 8 with the main components of the fifth embodiment. As illustrated in Fig. 13, the input current detection unit 27 is provided in between the AC source 4 and the rectifier circuit 5', and the same processing as the aforementioned converter device 2a is executed. In Fig. 13, the first switching signal Sg1 output to the switching circuit 10c from the converter control unit 15a and the second switching signal Sg2 output to the switching circuit 10d from the converter control unit 15a are omitted.

### {Sixth Embodiment}

A description is now given of a converter device and an air conditioner according to a sixth embodiment of the present invention. The converter device and the air conditioner according to the present embodiment are generally similar in configuration to the converter device and the air conditioner according to the fifth embodiment described before, except for the point that a DC voltage signal Vdc, which is a detection signal of a voltage across the smoothing capacitor 12 detected by the DC voltage detection unit 28, is input into a converter control unit 15b as illustrated in Fig. 14.

Hereinafter, a converter device 2b according to the present embodiment will be described with reference to Figs. 14 and 15. Fig. 14 illustrates a schematic configuration of a motor driver according to the sixth embodiment of the present invention, and Fig. 15 is a functional block diagram of a converter control unit according to the present embodiment.

The converter control unit 15b receives an input of a zero crossing signal detected by the zero crossing detection unit 17, an input current signal detected by the input current detection unit 27, and a DC voltage signal Vdc detected by the DC voltage detection unit 28. In a voltage command generation unit 23b of the converter control unit 15b, specified arithmetic calculation is performed by using the input zero crossing signal, the input current signal, and the DC voltage signal, a converter control phase (difference in phase from power supply voltage) and its voltage command amplitude are derived, and based on these parameters, a sine wave voltage command is generated.

Here, as for converter control phase, the converter control phase is delayed more as the input current becomes larger, in consideration of the phase difference between the inductors 6a and 6b as in the aforementioned fifth embodiment. The control phase is adjusted in accordance with a change rate (increase rate or decrease rate) of the input current signal in the vicinity of the zero crossing of power supply voltage.

In addition to the converter control phase, the voltage command amplitude is also adjusted in the present embodiment. Specifically, the voltage command amplitude value is set as an initial value, which can secure a DC voltage that enables the motor to avoid stalling even when a large motor load is present and thereby relatively large ripples are generated as the foregoing. This initial value is adjusted based on the DC voltage detected by the DC voltage detection unit 28. Specifically, a reference DC voltage is prepared as a reference, and as a difference between the reference DC voltage and the detected DC voltage value is larger, the voltage command amplitude is increased more and the amount of voltage increase by the converter is reduced more. This makes it possible to suppress the ripples contained in the DC voltage.

The power command generated in this way is output to the absolute value processing unit 24, and the same processing as in the first embodiment is performed thereafter.

As described in the foregoing, according to the converter device and the air conditioner in the present embodiment, a DC voltage detected by the DC voltage detection unit 28 is input into the converter control unit 15b, and a voltage command amplitude is adjusted based on the detected DC voltage value, so that the ripples contained in the DC voltage can be suppressed. Consequently, the effect of the harmonic reduction control of the converter can be enhanced and the controllability of the inverter can be enhanced.

In the converter devices according to the fifth and sixth embodiments, adopting the control mode in the low load operation in the aforementioned second or third embodiment makes it possible to obtain a satisfactory input current waveform even in the low load operation.

The present embodiment is also similarly applicable to the converter device and the air conditioner according to the fourth embodiment illustrated in Fig. 8.

### {Seventh Embodiment}

A description is now given of a converter device and an air conditioner according to a seventh embodiment of the present invention. In the converter device according to the present embodiment, diodes made of SiC elements are used as the diodes 7a to 7d for use in the switching circuits 10a to 10d illustrated in each of the embodiments described before.

Fig. 16 illustrates the result of simulating current waveforms of currents passing through the diodes 7a and 7b made of SiC elements, and current waveforms of currents passing through the switching elements 8a and 8b, for example. In Fig. 16, a graph (a) represents a current waveform of the current passing through the diode 7a constituted by a SiC element, a graph (b) represents a current waveform of the current passing through the diode 7b constituted by a SiC element, a graph (c) represents a current waveform of the current passing through the switching element 8a, and a graph (d) represents a current waveform of the current passing through the switching element 8b. Fig. 16 indicates that the currents passing through the diodes 7a and 7b are larger than the currents passing through the switching elements 8a and 8b.

By using SiC elements as the diode 7a to 7d in this way, it becomes possible to enhance the switching characteristics and/or on-state power loss characteristics.

The present invention is not limited to the embodiments disclosed, and various modifications are possible by, for example, combining each of the disclosed embodiments in part or in its entirety, without departing from the scope of the present invention.

### {Reference Signs List}

- 1: Motor driver
- 2, 2a, 2b: Converter device
- 3: Inverter device
- 4 AC: source
- 5, 5': Rectifier circuit
- 6a-6d: Inductor
- 7a-7d: Diode
- 8a-8d: Switching element
- 10a-10d: Switching circuit
- 12: Smoothing capacitor
- 15, 15a, 15b: Converter control unit
- 17: Zero crossing detection unit
- 21: Reference waveform generation unit
- 22: Inverted reference waveform generation unit
- 23, 23a, 23b: Voltage command generation unit
- 24: Absolute value processing unit
- 25: First signal generation unit
- 26: Second signal generation unit
- 27: Input current detection unit
- 28: DC voltage detection unit
- 29: Motor current detection unit
- Lp: Positive electrode bus line
- L1: Power line

## Claims

1. A converter device (2), connected between an AC source (4) and a load (20) for converting AC power from the AC source into DC power and outputting the DC power, comprising:
a rectification means (5) that converts the AC power input from the AC source into the DC power;
a smoothing means (12) that is connected to a DC output side of the rectification means (5) in parallel with the rectification means (5);
two switching circuits (10) that are provided in parallel with each other in between the rectification means (5) and the smoothing means (12); and
a control means (15) configured to control the switching circuits (10), wherein
each of the switching circuits (10) includes:
an inductive element (6) that is serially provided in a positive electrode bus line which connects the rectification means (5) and the smoothing means (12); and
a switching means (8) that is connected to a current output side of the inductive element (6) in parallel with the rectification means (5), and
the control means (15) includes:
a reference waveform generation means (21) configured to generate a reference waveform of a predetermined carrier frequency;
a voltage command generation means (23) configured to generate a voltage command;
a first signal generation means (25) configured to compare the reference waveform with the voltage command so as to generate a first switching signal for one switching circuit (10); and
a second signal generation means (26) configured to compare an inverted reference waveform having a phase deviated by 180 degrees from a phase of the reference waveform, with the voltage command so as to generate a second switching signal for the other switching circuit (10), **characterised in that**
in rated load operation, the carrier frequency is set to be closer to a lower limit than an upper limit within a range from the lower limit to the upper limit, the lower limit being a switching frequency satisfying a harmonic regulation value, the upper limit being a switching frequency satisfying a noise regulation value.

2. A converter device (2), connected to between an AC source (4) and a load (20) for converting AC power from the AC source into DC power and outputting the DC power, comprising:
a rectification means (5) that converts the AC power input from the AC source (4) into the DC power;
two switching circuits (10) that are provided in parallel with each other in between the AC source (4) and the rectification means (5); and
a control means (15) configured to control the switching circuits (10), wherein
each of the switching circuits (10) includes:
an inductive element (6) that is serially provided in one of electric power lines which connects the AC source (4) and the rectification means (5); and
a switching means (8) that is connected to a side of the inductive element (6) opposite to the AC source (4) in parallel with the rectification means (5), and
the control means (15) includes:
a reference waveform generation means (21) configured to generate a preference waveform of a predetermined carrier frequency;
a voltage command generation means (23) configured to generate a voltage command;
a first signal generation means (25) configured to compare the reference waveform with the voltage command so as to generate a first switching signal for one switching circuit (10); and
a second signal generation means (26) configured to compare an inverted reference waveform having a phase deviated by 180 degrees from a phase of the reference waveform, with the voltage command so as to generate a second switching signal for the other switching circuit (10), wherein
in rated load operation, the carrier frequency is set to be closer to a lower limit than an upper limit within a range from the lower limit to the upper limit, the lower limit being a switching frequency satisfying a harmonic regulation value, the upper limit being a switching frequency satisfying a noise regulation value.

3. The converter device (2) according to claim 1 or 2, wherein
in low load operation where the load is equal to or lower than a specified threshold value set in advance, the control means (15) executes a partial switching mode wherein a number of times of opening and closing the switching means (8) in one AC voltage waveform cycle, starting from a zero crossing point, is set in advance, and a phase and a pulse width for opening and closing the switching means (8) are controlled based on the number of times of switching, and
when the load is more than the threshold value, the control means (15) executes switching control based on the first switching signal and the second switching signal.

4. The converter device (2) according to claim 1 or 2, wherein
in low load operation where the load is equal to or lower than a specified threshold value set in advance, the control means (15) stops switching of any one of the switching circuits (10) while increasing a switching frequency of the other switching circuit (10), and
when the load is more than: the threshold value, the control means (15) executes switching control based on the first switching signal and the second switching signal.

5. The converter device (2) according to any one of claims 1 to 4, comprising
a current detection means (27) that is provided between the AC source (4) and the rectification means (5), wherein
the voltage command generation means (23) delays a phase of the voltage command more an an input current becomes larger, and adjusts the phase of the voltage command in accordance with a change rate of the input current in a vicinity of zero crossing when the change rate is a specified value or more.

6. The converter device (2) according to any one: of claims 1 to 5, comprising
a DC voltage detection means (28) configured to detect a voltage across the smoothing means (12), wherein
the voltage command generation means (23) calculates a difference between a preset reference DC voltage and a voltage value detected by the DC voltage detection means (28), and increases an amplitude of the voltage command more as the difference is larger.

7. The converter device (2) according to any one of claims 1 to 6, wherein
each of the switching circuits (10) has a diode (7) that directs a current passing through the switching means (8) in one direction or in both directions, and
the diode (7) is constituted by using a SiC element.

8. An air conditioner comprising the converter device (2) according to any one of claims 1 to 7.

## Patentansprüche

1. Wandlervorrichtung (2), die zwischen eine Wechselstromquelle (4) und eine Last (20) geschaltet ist, zum Wandeln von Wechselstrom von der Wechselstromquelle in Gleichstrom und Ausgeben des Gleichstroms, umfassend:
ein Gleichrichtungsmittel (5), welches das Wechselstromeingangssignal von der Wechselstromquelle in den Gleichstrom umwandelt,
ein Glättungsmittel (12), das mit einer Gleichstromausgangsseite des Gleichrichtungsmittels (5) parallel zu dem Gleichrichtungsmittel (5) verbunden ist,
zwei Verknüpfungsschaltungen (10), die zwischen dem Gleichrichtungsmittel (5) und dem Glättungsmittel (12) miteinander parallel geschaltet sind, und
ein Steuerungsmittel (15), das dafür konfiguriert ist, die Verknüpfungsschaltungen (10) zu steuern, wobei
jede der Verknüpfungsschaltungen (10) enthält:
ein induktives Element (6), das in einer positiven Elektrodenbusleitung, die das Gleichrichtungsmittel (5) und das Glättungsmittel (12) verbindet, in Reihe geschaltet ist, und
ein Schaltmittel (8), das mit einer Stromausgangsseite des induktiven Elements (6) parallel zu dem Gleichrichtungsmittel (5) geschaltet ist, und
wobei das Steuerungsmittel (15) enthält:
ein Referenzwellenformgenerierungsmittel (21), das dafür konfiguriert ist, eine Referenzwellenform mit einer zuvor festgelegten Trägerfrequenz zu generieren,
ein Spannungsbefehlsgenerierungsmittel (23), das dafür konfiguriert ist, einen Spannungsbefehl zu generieren,
ein erstes Signalgenerierungsmittel (25), das dafür konfiguriert ist, die Referenzwellenform mit dem Spannungsbefehl zu vergleichen, um ein erstes Schaltsignal für eine Verknüpfungsschaltung (10) zu generieren, und
ein zweites Signalgenerierungsmittel (26), das dafür konfiguriert ist, eine invertierte Referenzwellenform mit einer Phase, die sich um 180 Grad von einer Phase der Referenzwellenform unterscheidet, mit dem Spannungsbefehl zu vergleichen, um ein zweites Schaltsignal für die andere Verknüpfungsschaltung (10) zu generieren,
**dadurch gekennzeichnet, dass**
während des Nennlastbetriebes die Trägerfrequenz so eingestellt wird, dass sie innerhalb eines Bereichs von einer Untergrenze bis zu einer Obergrenze näher bei der Untergrenze liegt als bei der Obergrenze, wobei die Untergrenze eine Schaltfrequenz ist, die einen Oberschwingungsregelungswert erfüllt, wobei die Obergrenze eine Schaltfrequenz ist, die einen Rauschregelungswert erfüllt.

2. Wandlervorrichtung (2), die zwischen eine Wechselstromquelle (4) und eine Last (20) geschaltet ist, zum Wandeln von Wechselstrom von der Wechselstromquelle in Gleichstrom und Ausgeben des Gleichstroms, umfassend:
ein Gleichrichtungsmittel (5), welches das Wechselstromeingangssignal von der Wechselstromquelle in den Gleichstrom umwandelt,
zwei Verknüpfungsschaltungen (10), die zwischen der Wechselstromquelle (4) und dem Gleichrichtungsmittel (5) miteinander parallel geschaltet sind, und
ein Steuerungsmittel (15), das dafür konfiguriert ist, die Verknüpfungsschaltungen (10) zu steuern, wobei
jede der Verknüpfungsschaltungen (10) enthält:
ein induktives Element (6), das in einer von elektrischen Stromleitungen, welche die Wechselstromquelle (4) und das Gleichrichtungsmittel (5) verbindet, in Reihe geschaltet ist, und
ein Schaltmittel (8), das mit einer Seite des induktiven Elements (6) gegenüber der Wechselstromquelle (4) parallel zu dem Gleichrichtungsmittel (5) verbunden ist, und
das Steuerungsmittel (15) enthält:
ein Referenzwellenformgenerierungsmittel (21), das dafür konfiguriert ist, eine Referenzwellenform mit einer zuvor festgelegten Trägerfrequenz zu generieren,
ein Spannungsbefehlsgenerierungsmittel (23), das dafür konfiguriert ist, einen Spannungsbefehl zu generieren,
ein erstes Signalgenerierungsmittel (25), das dafür konfiguriert ist, die Referenzwellenform mit dem Spannungsbefehl zu vergleichen, um ein erstes Schaltsignal für eine Verknüpfungsschaltung (10) zu generieren, und
ein zweites Signalgenerierungsmittel (26), das dafür konfiguriert ist, eine invertierte Referenzwellenform mit einer Phase, die sich um 180 Grad von einer Phase der Referenzwellenform unterscheidet, mit dem Spannungsbefehl zu vergleichen, um ein zweites Schaltsignal für die andere Verknüpfungsschaltung (10) zu generieren, wobei
während des Nennlastbetriebes die Trägerfrequenz so eingestellt wird, dass sie innerhalb eines Bereichs von einer Untergrenze bis zu einer Obergrenze näher bei der Untergrenze liegt als bei der Obergrenze, wobei die Untergrenze eine Schaltfrequenz ist, die einen Oberschwingungsregelungswert erfüllt, wobei die Obergrenze eine Schaltfrequenz ist, die einen Rauschregelungswert erfüllt.

3. Wandlervorrichtung (2) nach Anspruch 1 oder 2, wobei
im Niedriglastbetrieb, wo die Last nicht größer als ein im Voraus eingestellter spezifizierter Schwellenwert ist, das Steuerungsmittel (15) einen teilweisen Schaltmodus ausführt, wobei eine Anzahl der Häufigkeit des Öffnens und Schließens des Schaltmittels (8) in einem einzelnen Wechselspannungswellenformzyklus, ausgehend von einem Nulldurchgangspunkt, im Voraus eingestellt ist und eine Phase und eine Impulsbreite zum Öffnen und Schließen des Schaltmittels (8) auf der Basis der Anzahl der Häufigkeit der Schaltvorgänge gesteuert werden, und
wenn die Last höher ist als der Schwellenwert, das Steuerungsmittel (15) eine Schaltsteuerung auf der Basis des ersten Schaltsignals und des zweiten Schaltsignals ausführt.

4. Wandlervorrichtung (2) nach Anspruch 1 oder 2, wobei
im Niedriglastbetrieb, wo die Last nicht größer als ein im Voraus eingestellter spezifizierter Schwellenwert ist, das Steuerungsmittel (15) das Schalten einer der Verknüpfungsschaltungen (10) stoppt, während die Schaltfrequenz der anderen Verknüpfungsschaltung (10) erhöht wird, und
wenn die Last höher als der Schwellenwert ist, das Steuerungsmittel (15) eine Schaltsteuerung auf der Basis des ersten Schaltsignals und des zweiten Schaltsignals ausführt.

5. Wandlervorrichtung (2) nach einem der Ansprüche 1 bis 4, umfassend:
ein Stromdetektionsmittel (27), das zwischen der Wechselstromquelle (4) und dem Gleichrichtungsmittel (5) angeordnet ist, wobei
das Spannungsbefehlsgenerierungsmittel (23) eine Phase der Spannung immer mehr verzögert, je größer ein Eingangsstrom wird, und die Phase des Spannungsbefehls gemäß einer Änderungsrate des Eingangsstroms in einer Nähe des Nulldurchgangs justiert, wenn die Änderungsrate ein spezifizierter Wert oder mehr ist.

6. Wandlervorrichtung (2) nach einem der Ansprüche 1 bis 5, umfassend:
ein Gleichspannungsdetektionsmittel (28), das dafür konfiguriert ist, eine an dem Glättungsmittel (12) anliegende Spannung zu detektieren, wobei
das Spannungsbefehlsgenerierungsmittel (23) eine Differenz zwischen einer voreingestellten Referenzgleichspannung und einem durch das Gleichspannungsdetektionsmittel (28) detektierten Spannungswert berechnet, und eine Amplitude des Spannungsbefehls umso mehr erhöht, je größer die Differenz ist.

7. Wandlervorrichtung (2) nach einem der Ansprüche 1 bis 6, wobei
jede der Verknüpfungsschaltungen (10) eine Diode (7) hat, die einen Strom, der durch das Schaltmittel (8) fließt, in einer einzigen Richtung oder in beiden Richtungen leitet, und die Diode (7) mittels eines SiC-Elements gebildet wird.

8. Klimaanlage, die die Wandlervorrichtung (2) nach einem der Ansprüche 1 bis 7 umfasst.

## Revendications

1. Dispositif de conversion (2), relié entre une source de courant alternatif (4) et une charge (20) afin de convertir le courant alternatif qui provient de la source de courant alternatif en courant continu, et de fournir le courant continu, comprenant :
un moyen de redressement (5) qui convertit le courant alternatif fourni par la source de courant alternatif en courant continu ;
un moyen de lissage (12) qui est relié à un côté de sortie de courant continu du moyen de redressement (5) en parallèle avec le moyen de redressement (5) ;
deux circuits de commutation (10) qui sont prévus en parallèle l'un à l'autre, entre le moyen de redressement (5) et le moyen de lissage (12) ; et
un moyen de commande (15) configuré pour contrôler les circuits de commutation (10), dans lequel
chacun des circuits de commutation (10) comprend :
un élément inductif (6) qui est prévu en série dans une ligne de bus d'électrode positive qui relie le moyen de redressement (5) et le moyen de lissage (12) ; et
un moyen de commutation (8) qui est relié à un côté de sortie de courant de l'élément inductif (6) en parallèle avec le moyen de redressement (5), et
le moyen de commande (15) comprend :
un moyen de génération de forme d'onde de référence (21) configuré pour générer une forme d'onde de référence d'une fréquence porteuse prédéterminée ;
un moyen de génération de commande de tension (23) configuré pour générer une commande de tension ;
un premier moyen de génération de signal (25) configuré pour comparer la forme d'onde de référence avec la commande de tension de façon à générer un premier signal de commutation pour un circuit de commutation (10) ; et
un second moyen de génération de signal (26) configuré pour comparer une forme d'onde de référence invertie ayant une phase déviée à 180 degrés par rapport à une phase de la forme d'onde de référence avec la commande de tension de façon à générer un second signal de commutation pour l'autre circuit de commutation (10), **caractérisé en ce que**
en cas de fonctionnement avec une charge nominale, la fréquence porteuse est définie comme étant plus proche d'une limite inférieure que d'une limite supérieure sur une plage comprise entre la limite inférieure et la limite supérieure, la limite inférieure étant une fréquence de commutation satisfaisant une valeur de régulation harmonique, la limite supérieure étant une fréquence de commutation satisfaisant une valeur de régulation de bruit.

2. Dispositif de conversion (2) relié entre une source de courant alternatif (4) et une charge (20) afin de convertir le courant alternatif qui provient de la source de courant alternatif en courant continu, et de fournir le courant continu, comprenant :
un moyen de redressement (5) qui convertit le courant alternatif fourni par la source de courant alternatif (4) en courant continu ;
deux circuits de commutation (10) qui sont prévus en parallèle l'un avec l'autre entre la source de courant alternatif (4) et le moyen de redressement (5) ; et
un moyen de commande (15) configuré pour contrôler les circuits de commutation (10), dans lequel
chacun des circuits de commutation (10) comprend :
un élément inductif (6) qui est prévu en série sur l'une des lignes d'alimentation électrique qui relie la source de courant alternatif (4) et le moyen de redressement (5) ; et
un moyen de commutation (8) qui est relié à un côté de l'élément inductif (6) opposé à la source de courant alternatif (4) en parallèle avec le moyen de redressement (5), et
le moyen de commande (15) comprend :
un moyen de génération de forme d'onde de référence (21) configuré pour générer une forme d'onde de référence d'une fréquence porteuse prédéterminée ;
un moyen de génération de commande de tension (23) configuré pour générer une commande de tension ;
un premier moyen de génération de signal (25) configuré pour comparer la forme d'onde de référence avec la commande de tension de façon à générer un premier signal de commutation pour un circuit de commutation (10) ; et
un second moyen de génération de signal (26) configuré pour comparer une forme d'onde de référence invertie ayant une phase déviée de 180 degrés par rapport à une phase de la forme d'onde de référence avec la commande de tension, de façon à générer un second signal de commutation pour l'autre circuit de commutation (10), dans lequel
en cas de fonctionnement avec une charge nominale, la fréquence porteuse est définie comme étant plus proche d'une limite inférieure que d'une limite supérieure sur une plage comprise entre la limite inférieure et la limite supérieure, la limite inférieure étant une fréquence de commutation satisfaisant une valeur de régulation harmonique, la limite supérieure étant une fréquence de commutation satisfaisant une valeur de régulation de bruit.

3. Dispositif de conversion (2) selon la revendication 1 ou 2, dans lequel
en cas de fonctionnement à faible charge, pendant lequel la charge est égale ou inférieure à une valeur de seuil spécifiée définie à l'avance, le moyen de commande (15) exécute un mode de commutation partielle au cours duquel un nombre d'ouvertures et de fermetures du moyen de commutation (8) au cours d'un cycle de forme d'onde de tension alternative, en partant d'un point de passage par le zéro, est défini à l'avance, et une phase et une durée d'impulsion pour ouvrir et fermer le moyen de commutation (8) sont contrôlées sur la base du nombre de commutations, et
lorsque la charge est supérieure à la valeur de seuil, le moyen de commande (15) exécute une commande de commutation sur la base du premier signal de commutation et du second signal de commutation.

4. Dispositif de conversion (2) selon la revendication 1 ou 2, dans lequel
en cas de fonctionnement à faible charge, pendant lequel la charge est égale ou inférieure à une valeur de seuil spécifiée définie à l'avance, le moyen de commande (15) arrête la commutation d'un quelconque des circuits de commutation (10) tout en augmentant une fréquence de commutation de l'autre circuit de commutation (10), et
lorsque la charge est supérieure à la valeur de seuil, le moyen de commande (15) exécute une commande de commutation sur la base du premier signal de commutation et du second signal de commutation.

5. Dispositif de conversion (2) selon l'une quelconque des revendications 1 à 4, comprenant
un moyen de détection de courant (27) qui est prévu entre la source de courant alternatif (4) et le moyen de redressement (5), dans lequel
le moyen de génération de commande de tension (23) retarde davantage une phase de la commande de tension au fur et à mesure qu'un courant d'entrée augmente, et ajuste la phase de la commande de tension selon une vitesse de changement du courant d'entrée à proximité du passage par le zéro lorsque la vitesse de changement est égale ou supérieure à une valeur spécifiée.

6. Dispositif de conversion (2) selon l'une quelconque des revendications 1 à 5, comprenant :
un moyen de détection de tension continue (28) configuré pour détecter une tension au sein du moyen de lissage (12), dans lequel
le moyen de génération de commande de tension (23) calcule une différence entre une tension continue de référence prédéfinie et une valeur de tension détectée par le moyen de détection de tension continue (28), et augmente davantage une amplitude de la commande de tension dès que la différence augmente.

7. Dispositif de conversion (2) selon l'une quelconque des revendications 1 à 6, dans lequel
chacun des circuits de commutation (10) possède une diode (7) qui oriente un courant qui traverse le moyen de commutation (8) dans une direction ou dans les deux directions, et
la diode (7) est constituée d'un élément SiC.

8. Climatiseur comprenant le dispositif de conversion (2) selon l'une quelconque des revendications 1 à 7.
